# EUROPÄISCHE PATENTSCHRIFT

(11) **EP 0 576 942 B1**
(45) Veröffentlichungstag und Bekanntmachung des Hinweises auf die Patenterteilung: **17.10.2001**
(21) Anmeldenummer: 93109827.1
(22) Anmeldetag: 19.06.1993
(51) Int. Cl.: B60R 13/10, G09F 3/02, B41M 3/14

(54) **Gegen Vervielfältigung und/oder missbräuchliche Entfernung und Wiederverwendung geschützte Plakette**
Plate protected against duplication and/or unauthorised removal and reutilisation
Plaquette protégée contre la copie et/ou l'enlèvement et la rèutilisation intempestifs

(30) Priorität: 24.06.1992 DE 4220344
(43) Veröffentlichungstag der Anmeldung: 05.01.1994
(73) Patentinhaber: Trautwein GmbH & Co, 45659 Recklinghausen (DE)
(72) Erfinder: Mattern, Hans Oswald, D-4716 Olfen (DE)
(74) Vertreter: Spalthoff, Adolf, Dipl.-Ing.

(56) Entgegenhaltungen:
- EP-A- 0 279 526
- EP-A- 0 281 350
- EP-A- 0 349 160
- EP-A- 0 353 974
- EP-A- 0 398 635
- CH-A- 678 835
- DE-A- 2 805 833
- DE-A- 2 831 587
- DE-A- 3 317 133
- DE-A- 3 905 155
- DE-B- 1 209 866
- FR-A- 2 177 292
- FR-A- 2 304 479
- GB-A- 2 173 150
- US-A- 4 219 596
- US-A- 4 227 720
- US-A- 4 246 307
- PATENT ABSTRACTS OF JAPAN vol. 005, no. 035 (C-046), 5.März 1981 & JP 55 159878 A (DAINIPPON PRINTING CO LTD), 12.Dezember 1980,
- PATENT ABSTRACTS OF JAPAN vol. 006, no. 178 (M-155), 11.September 1982 & JP 57 087324 A (NIPPON DENKAI KK), 31.Mai 1982,
- PATENT ABSTRACTS OF JAPAN vol. 016, no. 483 (P-1432), 7.Oktober 1992 & JP 04 172491 A (OLYMPUS OPTICAL CO LTD), 19.Juni 1992,
- PATENT ABSTRACTS OF JAPAN vol. 015, no. 163 (C-0826), 24.April 1991 & JP 03 035029 A (SEKISUI CHEM CO LTD), 15.Februar 1991,
- PATENT ABSTRACTS OF JAPAN vol. 016, no. 575 (C-1011), 15.Dezember 1992 & JP 04 225083 A (IDEMITSU PETROCHEM CO LTD), 14.August 1992,

## Beschreibung

Die Erfindung bezieht sich auf eine Plakette nach dem Oberbegriff des Patentanspruchs 1.

Aus der DE-A-28 31 587 ist eine Plakette zur Anbringung an Kraftfahrzeug-Kennzeichen bekannt, die als Trägerschicht, auf die Informationselemente aufgebracht sind, eine Folie aufweist, die in Segmente aufgeteilt ist. Diese Folie bzw. Trägerschicht ist einseitig abgedeckt, wobei diese Abdeckung dem Zusammenhalt der Segmente der Folie dient, bis die Folie an der mit der Plakette zu kennzeichnenden Fläche angebracht ist. Auf der der Abdeckung abgewandten Seite ist die Folie mit erhabenen Rasterelementen versehen, die einen Großteil der der Abdeckung abgewandten Seite der Folie bedecken. Zwischen den erhabenen Rasterelementen sind Unterbrechungen vorgesehen. Die Folie einschließlich der erhabenen Rasterelemente ist mit Informationselementen bedruckt, wobei die Informationselemente auf den erhabenen Rasterelementen und die Informationselemente auf den Unterbrechungen und damit unmittelbar auf den Segmenten bzw. der Folie aufgedruckt sind. Zur Anbringung der Plakette dient eine Kleberschicht, welche über den mit den Informationselementen versehenen erhabenen Rasterelementen und den Segmenten der Folie aufgebracht ist.

Bei einer weiteren, in der DE-A-28 31 587 gezeigten Plakette sind die Informationselemente oberhalb der Kleberschicht vorgesehen, wobei die erhabenen Rasterelemente zwischen der in Segmente aufgeteilten Folie und der Kleberschicht angeordnet sind.

Das wesentliche Sicherheitselement beider aus der DE-A-28 31 587 bekannten Plaketten liegt in dem Raster, da dieses neben den Informationselementen praktisch einen zweiten, sehr feinen, nicht nachahmbaren Aufdruck über die Fläche des Kennzeichnungsträgers bzw. der Plakette bildet, wobei das Raster Fälschungs- oder Ablöseversuche außerhalb des eigentlichen Kennzeichenaufdrucks sichtbar macht, weil hierdurch das Raster zerstört wird. Eine weitere Sicherung der bekannten Plakette ergibt sich aufgrund der innigen Verbindung zwischen der Kleberschicht und den Informationselementen, die zur Folge hat, daß bei versuchten Manipulationen die Informationselemente zumindest teilweise zerstört werden.

Angesichts der Weiterentwicklung moderner Ablöse- und Übertragungstechniken und der hierfür zur Verfügung stehenden Materialien und Werkzeuge werden die Anforderungen an fälschungssichere und gegen anderen Mißbrauch geschützte Kennzeichnungen, Plaketten etc. zunehmend größer.

Der Erfindung liegt daher die Aufgabe zugrunde, eine Plakette der eingangs genannten Art derart weiterzubilden, daß sie besser gegen Mißbrauch und mechanisches Ablösen von einem Kraftfahrzeug-Kennzeichen, einer Fahrzeugscheibe od.dgl. geschützt ist.

Diese Aufgabe wird erfindungsgemäß dadurch gelöst, daß die Plakette eine von der Kleberschicht separate, aus einem nie vollständig aushärtenden, transparenten Kunststoff hergestellte Transparentschicht aufweist. Bei einer mechanischen Abtrennung der erfindungsgemäßen Plakette von ihrer Unterfläche ergibt sich zwangsläufig eine Verformung der aus dem nie vollständig aushärtenden, transparenten Kunststoff hergestellten Transparentschicht. Diese Verformung bildet sich auch nicht wieder zurück, wodurch sich optische Verzerrungen der durch die Transparentschicht hindurch zu lesenden Informationselemente ergeben, die eine mißbräuchliche Weiterverwendung der unbefugt mechanisch abgetrennten Plakette zumindest erheblich erschweren, wenn nicht unmöglich machen.

Als nie vollständig aushärtender, transparenter Kunststoff läßt sich vorteilhaft ein aliphatisches Polyisocyanat einsetzen, bei dem es sich um einen thixotrop-zähflüssig-pastösen Kunststoff handelt. Dieser Kunststoff ist hochtransparent; er bleibt darüber hinaus stets plastisch verformbar, wobei er gegen Chemikalien- und Temperatureinflüsse hochgradig beständig ist.

Als besonders geeigneter Kunststoff hat sich auch ein aliphatisches Isocyanat in aromatischen Kohlenwasserstoffen erwiesen.

Vorteilhaft weist die Transparentschicht eine Dicke von ca. 10 - 15 µm auf.

Wenn die Plakette auf ihrer Trägerschicht zumindest einen Flächenbereich, der in einem nicht kopierfähigen hellen Pastellton eingefärbt ist, und Guillochenlinien aufweist, lassen sich unautorisiert auf einer modernen Farbkopiervorrichtung hergestellte Vervielfältigungsstücke, die die nicht kopierfähigen Farbelemente und Guillochenlinien der Trägerschicht gar nicht oder in verfälschter Form enthalten, mit vergleichsweise geringem Aufwand von ordnungsgemäßen Plaketten unterscheiden. Als Pastellfarbton kann vorteilhaft gelb, grün oder rosa vorgesehen sein.

Eine weitere Erhöhung der Sicherheit gegen unbefugte Vervielfältigung der Plakette ergibt sich, wenn die Trägerschicht in Flächenbereiche unterteilt ist, von denen zumindest zwei mit jeweils einem oder zumindest zwei unterschiedlichen hellen Pastellfarbtönen eingefärbt sind.

Sofern die Guillochenlinien fein und in dunklen Farbtönen ausgebildet sind, sind bei Vervielfältigungsversuchen an den Vervielfältigungsstücken auffällige Passerdifferenezne zu erkennen.

Unterschiedliche Guillochenlinien können jedoch auch in einem oder in mehreren hellen Pastellfarbtönen ausgebildet sein, die bei unbefugten Vervielfältigungsversuchen lediglich als Bruchstücke wiedergegeben werden, wobei dann ein vergleichsweise einfaches Auseinanderhalten von ursprünglicher Plakette und Vervielfältigungsstück möglich ist.

Zur weiteren Sicherung der erfindungsgemäßen Plakette gegen eine Ablösung mittels chemischen Lösungsmitteln od.dgl. kann der die Informationselemente der Plakette ausbildende Stoff eine Substanz enthalten, die bei Kontaktierung mit Lösungsmitteln aus den Informationselementen ausgelöst wird und sich erfließt. Eine mißbräuchliche z.B. von einem Kraftfahrzeug-Kennzeichen abgetrennte Plakette läßt sich somit sofort und ohne großen Aufwand erkennen. Eine mißbräuchliche Wiederanbringung der abgelösten Plakette an anderer Stelle ist somit quasi unmöglich gemacht.

Als derartige Substanz kann eine Triaryl-Methan-Lösung in Äthylalkohol oder der Flexofarbstoff Flexoblau 641 vorgesehen sein. Hierbei handelt es sich um Spezialsubstanzen, die beim Zusammentreffen mit Lösungsmitteln, z.B. mit Benzin, Benzol od.dgl., aus den Informationselementen ausläuft. Hierdurch wird der Farbton der Substanz großflächig verbreitet, wodurch die mehrschichtige Plakette bei Manipulationsversuchen mit Lösungsmitteln unlesbar wird. Eine Manipulation an der Plakette läßt sich somit sofort erkennen.

Mittels der vorstehend geschilderten nicht kopierfähigen Farbelemente und der bei Kontaktierung mit Lösungsmitteln aus den Informationselementen ausgelösten und sich erfließenden Substanz läßt sich die Plakette somit wirksam gegen eine fototechnische Vervielfältigung und eine Ablösung mit Lösungsmitteln schützen.

Um die Anzahl der Schichten der Plakette so gering als möglich zu halten, kann es vorteilhaft sein, die Trägerschicht als Kleberschicht auszubilden.

Eine weitere Sicherung gegen Mißbrauch der Plakette ergibt sich, wenn die Trägerschicht eine erhabene Prägung aufweist, die sich mit den Informationselementen deckt. Der so geschaffene optische Effekt geht bei einer Ablösung der Plakette verloren bzw. ist bei einer Vervielfältigung der Plakette bei den Vervielfältigungsstücken nicht mehr erkennbar.

Vorteilhaft enthält die Plakette UV-Pigmente, die nur unter einer Speziallampe erkennbar sind. Hierdurch wird der Mißbrauch mit derartigen Plaketten weiter eingeschränkt.

Des weiteren kann zur Sicherung der Plakette gegen mißbräuchliche Umsetzung und Weiterverwendung eine partiell ausgebildete, an einer Seite der die Informationselemente tragenden Trägerschicht benachbarte Trennlackschicht vorgesehen sein, mittels der zwischen der Trägerschicht und einer der Trennlackschicht andererseits benachbarten Plakettenschicht Unterbrechungsverbindungen ausgebildet sind. Derartige Unterbrechungsverbindungen erschweren das unbefugte Ablösen der Plakette von ihrem Untergrund.

Vorteilhaft lassen sich die bei normalen Lichtverhältnissen unsichtbaren UV-Pigmente in der Trennlackschicht unterbringen.

Als besonders zweckmäßig hat es sich erwiesen, die Trennlackschicht zwischen der die Informationselemente tragenden Trägerschicht und der Transparentschicht anzuordnen.

Eine vorteilhaft aus Hostaphan auszugestaltende Stabilisierungsschicht kann nach einem Aufkleben bzw. einem Aufbringen der Plakette auf eine Unterlage entfernt werden; es ist jedoch auch möglich, die Stabilisierungsschicht auf der Plakette zu belassen. Sie wird dann irgendwann durch Witterungseinflüsse entfernt; dies ist ohne irgendwelche schädlichen Beeinflussungen auf die anderen Schichten der Plakette möglich, da die aus Hostaphan hergestellte Stabilisierungsschicht lediglich zur Stabilisierung während des Aufbringungs- bzw. Verklebevorgangs dient.

Wenn eine die Plakette gegen Witterungseinflüsse sichernde Schutzschicht vorgesehen ist, die durch die vorstehend erwähnte adhäsivhaftend ihr angeordnete Stabilisierungsschicht verstärkt werden kann, kann bei der Auslegung der unter der Schutzschicht anzuordnenden anderen Plakettenschichten der Witterungseinfluß vernachlässigt werden, wodurch die Vielzahl der für die Plakettenschichten zur Auswahl stehenden Werkstoffe erheblich vergrößert wird. Vorteilhaft kann eine derartige Schutzschicht aus Acrylatfolie hergestellt werden, so daß sie hochbeständig und transparent ist.

Vorteilhaft besteht die Kleberschicht der erfindungsgemäßen Plakette aus einem auflaminierten, UV-beständigen Acrylat-Klebstoff, der ohne Binder hergestellt ist. Hierdurch kann vermieden werden, daß die Kleberschicht bei Wärmeeinleitung teilbar wird.

Um die Funktionssicherheit der Abdeckschicht zu erhöhen und um diese einfach handhabbar, insbesondere entfernbar, zu machen, besteht die Abdeckschicht vorteilhaft aus einem einseitig siliconisierten oder polyäthylenbeschichteten, rückseitig geschlitzten Schutzpapier.

In einer vorteilhaften Ausgestaltung der erfindungsgemäßen Plakette enthält diese von außen nach innen bzw. von innen nach außen die Stabilisierungsschicht, die Schutzschicht, die Transparentschicht, die Trennlackschicht, die die Informationselemente tragende Trägerschicht, die Kleberschicht und die Abdeckschicht.

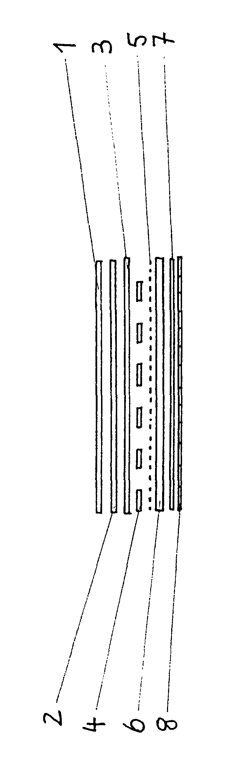

Im folgenden wird die Erfindung an Hand einer Ausführungsform unter Bezugnahme auf die Zeichnung näher erläutert, die eine auseinandergezogene Prinzipdarstellung des Aufbaus der erfindungsgemäßen Plakette darstellt, wie sie auf einem Kraftfahrzeugkennzeichen, auf der Außenfläche einer Fahrzeugscheibe bzw. auf einer Karosseriefläche anbringbar ist. Falls die Plakette auf der Innenseite einer Fahrzeugscheibe angebracht werden soll, ergibt sich eine entsprechend inverte Aufeinanderfolge der verschiedenen Schichten.

Eine Stabilisierungsschicht 1 ist aus Hostaphan hergestellt und ist adhäsivhaftend auf einer Schutzschicht 2 angeordnet. Die Schutzschicht 2 ist aus Acrylatfolie hergestellt. Die Stabilisierungsschicht 1 dient lediglich als Verstärkung der aus Acrylatfolie hergestellten Schutzschicht 2. Demgemäß kann die Stabilisierungsschicht 1 nach dem Aufkleben der in dieser Ausführungsform mehrschichtigen Plakette entfernt werden. Sie kann aber auch auf den darunter angeordneten Schichten der mehrschichtigen Plakette verbleiben, wobei sie dann irgendwann durch Witterungseinflüsse entfernt wird. Die Stabilisierungsschicht 1 hat nach der Aufbringung der Plakette keinen weiteren Einfluß auf die anderen Schichten der mehrschichtigen Plakette; sie dient lediglich zur Stabilisierung während des Aufbringungs- bzw. Verklebungsvorganges.

Die Acrylatfolie der unterhalb der Stabilisierungsschicht 1 angeordneten Schutzschicht 2 ist eine hochbeständige und transparente Folie. Sie dient als Schutz gegen Witterungseinwirkungen für die gesamten, unter der Schutzschicht 2 angeordneten Schichten der in dieser Ausführungsform mehrschichtigen Plakette.

Eine unterhalb der Schutzschicht 2 angeordnete Transparentschicht 3 ist aus einem aliphatischen Polyisocyanat in aromatischen Kohlenwasserstoffen, bei dem es sich um einen thixotrop-zähflüssig-pastösen Kunststoff handelt, hergestellt. Dieses aliphatische Polyisocyanat hat sich bei Versuchen als hervorragend zur Ausgestaltung der Transparentschicht 3 geeignet herausgestellt. Die derart hergestellte Transparentschicht 3 ist hochtransparent und härtet nie komplett aus. Sie bleibt stets plastisch verformbar und ist hochgradig beständig gegen Chemikalieneinflüsse und Wärme.

Unterhalb der Transparentschicht 3 ist eine Trennlackschicht 4 angeordnet, die aus lediglich partiell aufgebrachtem Trennlack besteht. Die Trennlackschicht 4 bzw. der Trennlack hat die Aufgabe, Unterbrechungsverbindungen zwischen einer unterhalb der Trennlackschicht 4 angeordneten, mit Informationselementen 5 versehenen Trägerschicht 6 und der Transparentschicht 3 herzustellen. Des weiteren beinhaltet der die Trennlackschicht 4 ausbildende Trennlack UV-Pigmente, die bei der Identifizierung von Fälschungen der Plakette hilfreich sind. Derartige UV-Pigmente sind lediglich mittels Speziallampen erkennbar.

Die unterhalb der Trennlackschicht 4 vorgesehenen Informationselemente 5 bestehen aus partiellen Texten und Symbolen, die z.B. in schwarzer Siebdruckfarbe mit flexibler Einstellung gedruckt sind. In die Siebdruckfarbe ist ein Anteil Flexoblau 641 eingebaut. Hierbei handelt es sich um eine Spezialtinte, die beim Zusammentreffen mit stärkeren Lösungsmitteln, wie z.B. Benzin, Benzol od.dgl., in die schwarze Siebdruckfarbe ausläuft und demgemäß großflächig den blauen Farbton überall verbreitet. Sofern an der mehrschichtigen Plakette bei Manipulationsversuchen ein Lösungsmittel zum Einsatz kommt, wird die mehrschichtige Plakette somit unlesbar.

Die Trägerschicht 6 kann eine erhabene Prägung aufweisen; die Informationselemente 5 können dann fluchtend bzw. in Deckung mit der Prägung angeordnet sein.

Es kann auch zweckmäßig sein, die Informationselemente 5 in einem nicht kopierbaren Farbton, z.B. in einem hellen Pastellfarbton in gelb, grün oder rosa, vorzusehen.

Zur Ausgestaltung der Trägerschicht 6, die die Informationselemente 5 enthält, kann eine sog. Fondfarbe verwendet werden, wie sie nach der Straßenverkehrszulassungsordnung für Prüfplaketten vorgeschrieben ist. Eine derartige Fondfarbe kann zur Ausgestaltung der Trägerschicht 6 aber auch für normale Zulassungsplaketten verwendet werden. Vorteilhaft wird ein Teil der Trägerschicht 6 in einem solchen Farbton, vorzugsweise in einem Silberton, gehalten. Auf dem nicht eingefärbten Teil der Trägerschicht 6 werden Guillochenlinien in einem nicht kopierbaren Pastellfarbton im Gelb-, Grün- oder Rosabereich aufgedruckt. Die Guillochenlinien können für ein und dieselbe Plakette bzw. für ein und dieselbe Trägerschicht 6 einer Plakette auch in zwei oder mehreren Farbtönen vorgesehen sein, wodurch die Kopiermöglichkeiten weiter eingeschränkt werden.

Zusätzlich können ein oder mehrere Flächenbereiche der Trägerschicht flächig in einem oder mehreren nicht kopierbaren, hellen Pastellfarbtönen eingefärbt sein.

Die Guillochenlinien können auch in dunklen Farbtönen vorgesehen sein. Hierbei sind bei Kopierversuchen auffällige Passerdifferenzen zu erkennen.

Eine unterhalb der Trägerschicht 6 angeordnete Kleberschicht 7 besteht aus einem Acrylatkleber, der auflaminiert und UV-beständig ist. Der Acrylatkleber wird ohne Binder hergestellt und ist somit bei Wärmeeinwirkung nicht teilbar.

Es ist auch möglich, die Trägerschicht 6 selbst aus einem geeigneten Kleber herzustellen, wobei dann die Kleberschicht 7 entfällt.

Zur besseren Handhabung der Plakette ist die Kleberschicht 7 mit einer Abdeckschicht 8 versehen, bei der es sich um ein dem Acrylatkleber zugeordnetes, einseitig siliconisiertes oder polyäthylenbeschichtetes Schutzpapier handelt. Zur Erleichterung der Entfernung des Schutzpapiers bzw. der Abdeckschicht 8 ist dieses bzw. diese rückseitig geschlitzt.

## Patentansprüche

1. Plakette zur Anbringung an Kraftfahrzeug-Kennzeichen, an der Innen- oder Außenfläche von Fahrzeugscheiben oder an Karosserieflächen, mit einer Trägerschicht (6), auf die Informationselemente (5) aufgebracht sind, und einer Kleberschicht (7), **dadurch gekennzeichnet, daß** die Plakette eine von der Kleberschicht (7) separate, aus einem nie vollständig aushärtenden, transparenten Kunststoff hergestellte Transparentschicht (3) aufweist.

2. Plakette nach Anspruch 1, bei der als nie vollständig aushärtender, transparenter Kunststoff ein aliphatisches Polyisocyanat vorgesehen ist.

3. Plakette nach Anspruch 1 oder 2, bei der als nie vollständig aushärtender, transparenter Kunststoff ein aliphatisches Isocyanat in aromatischen Kohlenwasserstoffen vorgesehen ist.

4. Plakette nach einem der Ansprüche 1 bis 3, bei der die Transparentschicht eine Dicke vom 10 bis 15 µm aufweist.

5. Plakette nach einem der Ansprüche 1 bis 4, bei der die Trägerschicht (6) zumindest in einem Flächenbereich mit einem nicht kopierfähigen hellen Pastellfarbton eingefärbt ist, und daß auf der Trägerschicht nicht kopierfähige Guillochenlinien ausgebildet sind.

6. Plakette nach Anspruch 5, bei der die Trägerschicht (6) in Flächenbereiche unterteilt ist, von denen zumindest zwei mit jeweils einem von zumindest zwei unterschiedlich hellen Pastellfarbtönen eingefärbt sind.

7. Plakette nach Anspruch 5 oder 6, bei der Guillochenlinien in zumindest einem dunklen Farbton vorgesehen sind.

8. Plakette nach einem der Ansprüche 5 bis 7, bei der Guillochenlinen in zumindest einem hellen Pastellfarbton vorgesehen sind.

9. Plakette nach einem der Ansprüche 1 bis 8, bei der der die Informationselemente ausbildende Stoff eine Substanz enthält, die bei Kontaktierung mit Lösungsmitteln aus den Informationselementen ausgelöst wird und sich erfließt.

10. Plakette nach Anspruch 9, bei der als Substanz eine Triaryl-Methan-Lösung in Ethylalkohol vorgesehen ist.

11. Plakette nach Anspruch 9 oder 10, bei der als Substanz Flexoblau 641 vorgesehen ist.

12. Plaklette nach einem der Ansprüche 1 bis 11, bei der die Trägerschicht (6) als Kleberschicht ausgebildet ist.

13. Plakette nach einem der Ansprüche 1 bis 12, bei der die Trägerschicht (6) eine erhabene Prägung aufweist, die sich mit den Informationselementen deckt.

14. Plakette nach einem der Ansprüche 1 bis 13, bei der bei normalen Lichtverhältnissen unsichtbare UV-Pigmente vorgesehen sind.

15. Plakette nach einem der Ansprüche 1 bis 14, bei der eine partiell ausgebildete, an einer Seite der die Informationselemente (5) tragenden Trägerschicht (6) benachbarte Trennlackschicht (4) vorgesehen ist, mittels der zwischen der Trägerschicht (6) und einer der Tennlackschicht (4) benachbarten Plakettenschicht Unterbrechungsverbindungen ausgebildet sind.

16. Plakette nach Anspruch 15, bei der die Trennlackschicht (4) bei normalen Lichtverhältnissen unsichtbare UV-Pigmente enthält.

17. Plakette nach Anspruch 15 oder 16, bei der die Trennlackschicht (4) der Transparentschicht (3) benachbart ist.

18. Plakette nach einem der Ansprüche 1 bis 17, bei der eine die Plakette während der Anbringung stabilisierende Stabilisierungsschicht (1) vorgesehen ist.

19. Plakette nach einem der Ansprüche 1 bis 18, bei der eine die Plakette gegen Witterungseinflüsse sichernde Schutzschicht (2) vorgesehen ist.

20. Plakette nach einem der Ansprüche 1 bis 19, bei der die vorgesehene Kleberschicht (7) oder die als Kleberschicht ausgebildete Trägerschicht (6) aus einem auflaminierten, UV-beständigen Acrylat-Klebstoff ausgebildet ist, der ohne Binder hergestellt ist.

21. Plakette nach Anspruch 20, bei der eine die Kleberschicht (7) abdeckende Abdeckschicht (8) aus einem einseitig siliconisierten oder polyethylenbeschichteten, rückseitig geschlitzten Schutzpapier vorgesehen ist.

22. Plakette nach Anspruch 21, die von außen nach innen oder von innen nach außen die Stabilisierungsschicht (1), die Schutzschicht (2), die Transparentschicht (3), die Trennlackschicht (4), die die Informationselemente (5) tragende Trägerschicht (6), die Kleberschicht (7) und die Abdeckschicht (8) aufweist.

## Claims

1. Plate for fitting to motor vehicle number plates, to the inner face or outer face of vehicle plates or to bodywork surfaces, having a carrier layer (6), to which information elements (5) are applied, and an adhesive layer (7), **characterised in that** the plate has a transparent layer (3) which is separate from the adhesive layer (7) and which is produced from a transparent plastics material which never completely sets.

2. Plate according to claim 1, wherein an aliphatic polyisocyanate is provided as the transparent plastics material which never completely sets.

3. Plate according to claim 1 or 2, wherein an aliphatic isocyanate in aromatic hydrocarbons is provided as the transparent plastics material which never completely sets.

4. Plate according to any one of claims 1 to 3, wherein the transparent layer has a thickness of from 10 to 15 µm.

5. Plate according to any one of claims 1 to 4, wherein the carrier layer (6) is coloured at least in a region of the face in a non-reproducible light pastel shade, and wherein non-reproducible guilloche lines are formed on the carrier layer (6).

6. Plate according to claim 5, wherein the carrier layer (6) is subdivided into face regions, of which at least two are each coloured in one of at least two different light pastel shades.

7. Plate according to claim 5 or 6, wherein guilloche lines are provided in at least one dark shade.

8. Plate according to any one of claims 5 to 7, wherein guilloche lines are provided in at least one light pastel shade.

9. Plate according to any one of claims 1 to 8, wherein the material which forms the information elements contains a substance which, upon contact with solvents, is released from the information elements and runs.

10. Plate according to claim 9, wherein a triarylmethane solution in ethyl alcohol is provided as the substance.

11. Plate according to claim 9 or 10, wherein Flexoblau 641 is provided as the substance.

12. Plate according to any one of claims 1 to 11, wherein the carrier layer (6) is in the form of the adhesive layer.

13. Plate according to any one of claims 1 to 12, wherein the carrier layer (6) has a raised embossed portion which is covered by the information elements.

14. Plate according to any one of claims 1 to 13, wherein there are provided UV pigments which are invisible under normal light conditions.

15. Plate according to any one of claims 1 to 14, wherein there is provided a partially formed separating lacquer layer (4) which is adjacent, at one side, to the carrier layer (6), which carries the information elements (5), and by means of which discontinuous connections are formed between the carrier layer (6) and a plate layer which is adjacent to the separating lacquer layer (4).

16. Plate according to claim 15, wherein the separating lacquer layer (4) contains UV pigments which are invisible under normal light conditions.

17. Plate according to claim 15 or 16, wherein the separating lacquer layer (4) is adjacent to the transparent layer (3).

18. Plate according to any one of claims 1 to 17, wherein there is provided a stabilising layer (1) which stabilises the plate during fitting.

19. Plate according to any one of claims 1 to 18, wherein there is provided a protective layer (2) which protects the plate from weathering effects.

20. Plate according to any one of claims 1 to 19, wherein the adhesive layer (7) provided or the carrier layer (6), which is in the form of the adhesive layer, is formed from a laminated, UV-resistant acrylate adhesive which is produced without binding agents.

21. Plate according to claim 20, wherein there is provided a covering layer (8), which covers the adhesive layer (7), of a protective paper which is siliconised or coated with polyethylene on one side and which is slitted on the reverse.

22. Plate according to claim 21, which has, in an inward or outward direction, the stabilising layer (1), the protective layer (2), the transparent layer (3), the separating lacquer layer (4), the carrier layer (6), which carries the information elements (5), the adhesive layer (7) and the covering layer (8).

## Revendications

1. Plaquette destinée à être appliquée sur une plaque d'immatriculation de véhicules, sur la face intérieure ou extérieure de vitres de véhicules ou sur des parties de carrosserie de véhicules, comportant une couche-support (6), sur laquelle des éléments d'information (5) sont appliqués et une couche d'adhésif (7), **caractérisée en ce que** la plaquette présente une couche transparente, distincte de la couche d'adhésif (7), en une matière plastique transparente qui ne durcit jamais totalement.

2. Plaquette selon la revendication 1, dans laquelle il est prévu comme matière plastique transparente ne durcissant jamais totalement, un polyisocyanate aliphatique.

3. Plaquette selon la revendication 1 ou 2, dans laquelle il est prévu comme matière plastique transparente ne durcissant jamais totalement, un isocyanate aliphatique dans des hydrocarbures armoatiques.

4. Plaquette selon une des revendications 1 à 3, dans laquelle la couche transparente a une épaisseur comprise entre 10 et 15 *µ*m.

5. Plaquette selon une des revendications 1 à 4, dans laquelle la couche-support (6), au moins dans une partie de surface, est colorée avec une couleur pastel claire non copiable, et dans laquelle des lignes guillochées non copiables sont formées dans la couche-support.

6. Plaquette selon la revendication 5, dans laquelle la couche-support (6) est subdivisée en parties de surface, parmi lesquelles deux au moins sont colorées chacune avec une couleur pastel prise parmi au moins deux couleurs pastel différentes.

7. Plaquette selon la revendication 5 ou 6, dans laquelle il est prévu des lignes guillochées avec au moins une couleur sombre.

8. Plaquette selon une des revendications 5 à 7, dans laquelle il est prévu des lignes guillochées avec au moins une couleur claire.

9. Plaquette selon une des revendications 1 à 8, dans laquelle le matériau constituant les éléments d'information contient une substance qui, au contact de solvants se sépare des éléments d'information et s'étale.

10. Plaquette selon la revendication 9, dans laquelle il est prévu comme substance une solution de triarylméthane dans de l'alcool éthylique.

11. Plaquette selon une des revendications 9 ou 10, dans laquelle il est prévu comme substance du Flexobleu 641.

12. Plaquette selon une des revendications 1 à 11, dans laquelle la couche-support (6) est conformée en couche d'adhésif.

13. Plaquette selon une des revendications 1 à 12, dans laquelle la couche-support (6) présente un motif en relief qui coïncide avec les éléments d'information.

14. Plaquette selon une des revendications 1 à 13, dans laquelle des pigments UV invisibles dans des conditions d'éclairage normales sont prévus.

15. Plaquette selon une des revendications 1 à 14, dans laquelle il est prévu une couche (4) partielle de vernis de séparation dans le voisinage d'une face de la couche-support (6) portant les éléments d'information (5), à l'aide de laquelle des liaisons discontinues sont formées entre la couche-support et une couche de plaquette voisine de la couche de vernis de séparation (4).

16. Plaquette selon la revendication 15, dans laquelle la couche de vernis de séparation (4) contient des pigments UV invisibles dans des conditions d'éclairage normales.

17. Plaquette selon la revendication 15 ou 16, dans laquelle la couche de vernis de séparation (4) est voisine de la couche transparente (3).

18. Plaquette selon une des revendications 1 à 17, dans laquelle il est prévu une couche de stabilisation (1) qui stabilise la plaquette pendant l'application.

19. Plaquette selon une des revendications 1 à 18, dans laquelle il est prévu une couche de protection (2) qui protège la plaquette contre les intempéries.

20. Plaquette selon une des revendications 1 à 19, dans laquelle la couche d'adhésif (7) prévue ou la couche-support (6) conformée en couche d'adhésif est constituée d'un adhésif à base d'acrylates résistant aux UV plaqué, fabriqué sans liant.

21. Plaquette selon une la revendication 20, dans laquelle il est prévu une couche de couverture (8) couvrant la couche d'adhésif (7), formée d'un papier protecteur siliconé ou revêtu de polyéthylène sur une face et fendu sur la face arrière.

22. Plaquette selon la revendication 21, qui présente, de l'extérieur vers l'intérieur ou de l'intérieur vers l'extérieur, la couche de stabilisation (1), la couche de protection (2), la couche transparente (3), la couche de vernis de séparation (4), la couche-support (6) portant les éléments d'information, la couche d'adhésif (7) et la couche de couverture (8).
